# EUROPEAN PATENT SPECIFICATION

(11) **EP 3 633 418 B1**
(45) Date of publication and mention of the grant of the patent: **14.08.2024**
(21) Application number: 18809636.6
(22) Date of filing: 28.05.2018
(51) Int. Cl.: G02B 1/14, G02B 1/115, G02C 7/00

(54) **EYEGLASS LENS, COMPOSITION FOR PRIMER LAYER FORMATION, AND METHOD FOR MANUFACTURING EYEGLASS LENS**
BRILLENGLAS, ZUSAMMENSETZUNG ZUR BILDUNG EINER PRIMERSCHICHT UND VERFAHREN ZUR HERSTELLUNG EINES BRILLENGLASES
VERRE DE LUNETTES, COMPOSITION POUR FORMATION DE COUCHE D'APPRÊT ET PROCÉDÉ DE FABRICATION DE VERRE DE LUNETTES

(30) Priority: 31.05.2017 JP 2017107529
(43) Date of publication of application: 08.04.2020
(73) Proprietor: Nikon-Essilor Co., Ltd., Tokyo 130-0026 (JP)
(72) Inventor: SAKAI, Koichi, Tokyo 130-0026 (JP)
(74) Representative: Hoffmann Eitle
(86) International application number: PCT/JP2018/020402
(87) International publication number: WO 2018/221466

(56) References cited:
- EP-A1- 2 617 785
- WO-A1-02/02676
- WO-A1-2015/163464
- WO-A1-2017/039019
- JP-A- 2015 138 117

## Description

### TECHNICAL FIELD

The disclosure relates to a spectacle lens, a primer layer-forming composition, and a spectacle lens manufacturing method.

### BACKGROUND ART

A primer layer is disposed on a lens base in order to improve the adhesion between the lens base and a hard coat layer or an antireflective layer disposed over the lens base, in some cases (see, for example, Patent Literature 1).

Patent Literature 2 discloses eyeglass lenses that have primer layer comprising a polyurethane polycarbonate and inorganic particles. In the examples polymers having properties close to those of the present polymers are used.

### CITATION LIST

### PATENT LITERATURE

Patent Literature 1: WO 2015/163464
Patent Literature 2: EP 2 617 785 A1

### SUMMARY OF INVENTION

The present disclosure relates to a spectacle lens comprising: a lens base; a primer layer disposed on at least one of an object side surface and an eyeball side surface of the lens base; and at least one layer selected from the group consisting of a hard coat layer and an antireflective layer, the at least one layer being disposed on the primer layer, wherein the primer layer contains a polycarbonate polyurethane resin and inorganic oxide particles, wherein the polycarbonate polyurethane resin has a tensile strength of greater than 40 N/mm², wherein the polycarbonate polyurethane resin has an elongation of not less than 300%, and wherein a content of the inorganic oxide particles is 10 to 40 vol% based on a total volume of the primer layer.

The present disclosure also relates to a primer layer-forming composition comprising a polycarbonate polyurethane resin, inorganic oxide particles, and a solvent, wherein the polycarbonate polyurethane resin has a tensile strength of greater than 40 N/mm², wherein the polycarbonate polyurethane resin has an elongation of not less than 300%, and wherein a content of the inorganic oxide particles is 10 to 40 vol% based on a volume of total solids of the primer layer-forming composition.

The present disclosure further relates to a spectacle lens manufacturing method comprising a step of forming a primer layer by applying the above primer layer-forming composition onto at least one of an object side surface and an eyeball side surface of a lens base to form a coating and curing the coating.

### BRIEF DESCRIPTION OF DRAWINGS

[FIG. 1] FIG. 1 is a cross-sectional view of one embodiment of a spectacle lens.
[FIG. 2] FIG. 2 is a cross-sectional view of another embodiment of a spectacle lens.
[FIG. 3] FIG. 3 is a schematic view of a device used in crazing resistance evaluation.

### DESCRIPTION OF EMBODIMENTS

A spectacle lens, a primer layer-forming composition, and a spectacle lens manufacturing method in the present embodiment are described below in detail.

Note that, in the description, numerical values given before and after "to" are included in the range as the lower and upper limits.

Conventionally, spectacle lenses in which a hard coat layer, an antireflective layer or the like is disposed over a lens base via a primer layer have been studied. It is desired for spectacle lenses to have such characteristics as excellent crazing resistance, impact resistance and adhesion.

The term "crazing resistance" refers to the property of suppressing cracking that may occur when a spectacle lens is applied with a load and thereby fixed by use of a working machine during lens shape machining of the spectacle lens. The term "adhesion" refers to the adhesion of a coating (e.g., a primer layer, a hard coat layer, an antireflective layer) disposed on a lens base.

The spectacle lens in the embodiment is excellent in all of the crazing resistance, the impact resistance and the adhesion. The spectacle lens in the embodiment also has excellent transparency.

With the primer layer-forming composition in the embodiment, the spectacle lens having the foregoing properties can be manufactured.

In the following, the primer layer-forming composition is first detailed, and then the spectacle lens and a manufacturing method thereof are detailed.

The primer layer-forming composition contains a predetermined polycarbonate polyurethane resin, inorganic oxide particles and a solvent. The components contained in the primer layer-forming composition are described below in detail.

### <Polycarbonate Polyurethane Resin>

The primer layer-forming composition contains a polycarbonate polyurethane resin (hereinafter also simply called "specified resin").

The polycarbonate polyurethane resin is a polyurethane resin having a polycarbonate skeleton. More specifically, the polycarbonate polyurethane resin is a polyurethane resin composed of a diol component and a diisocyanate component, and polycarbonate polyol is used as the diol component.

The type of polycarbonate polyol is not particularly limited, and examples thereof include poly(alkylene carbonates) such as poly(hexamethylene carbonate).

The type of polyisocyanate is not particularly limited, and examples thereof include: aromatic isocyanate compounds such as tolylene diisocyanate, 4,4-diphenylmethane diisocyanate, xylene diisocyanate, 1,5-naphthalene diisocyanate, toluidine diisocyanate, phenylene diisocyanate, and 4,4-diphenyl diisocyanate; and aliphatic isocyanate compounds such as 1,3,3-trimethylhexamethylene diisocyanate, hexamethylene diisocyanate, isophorone diisocyanate, hydrogenated xylene diisocyanate, lysine diisocyanate, lysine ester triisocyanate, 1,6,11-undecane triisocyanate, 1,8-diisocyanate-4-isocyanatemethyloctane, and 1,3,6-hexamethylene triisocyanate.

The tensile strength of the specified resin is greater than 40 N/mm², and because the resulting spectacle lens can have excellent crazing resistance, preferably not less than 45 N/mm². The upper limit of the tensile strength is not particularly limited and may be 70 N/mm² or less, for example.

The tensile strength is the value obtained at 25°C.

One method of measuring the tensile strength of the specified resin is as follows:
First, a film of the specified resin with 15-mm width, 200-mm length and 450- to 550-µm thickness is prepared, and gage marks are given at 50-mm intervals in the central region of the film. This film is attached to a tensile tester (Autograph AGS-X, manufactured by Shimadzu Corporation), the distance between the grips of the tensile tester is set to 100 mm, and the film is pulled to its breaking point at a rate of 200 mm/min. The stress at the breaking point is defined as the tensile strength of the specified resin. The measurement temperature is 25°C.

The method of manufacturing the above film of the specified resin is not particularly limited, and one exemplary method involves applying a solution containing the specified resin onto a substrate to a film thickness after drying of 450 to 550 µm, drying the coating to form a film, and cutting the resulting film to the predetermined size. The method of drying the coating is not particularly limited, and one exemplary method involves drying at room temperature for 12 to 36 hours and then further drying at a temperature of 60°C to 100°C for 5 to 10 hours.

The elongation of the specified resin is not less than 300%, and because the resulting spectacle lens can have more excellent impact resistance, preferably not less than 320%. The upper limit of the elongation is not particularly limited and may be 1500% or less, for example.

The elongation is the value obtained at 25°C.

The elongation of the specified resin may be measured concurrently with the foregoing measurement of the tensile strength. The elongation is calculated as follows: Elongation (%) = ((Gage distance at breaking point - Gage distance before testing) / (Gage distance before testing) x 100

The specified resin may be dispersed in a particulate form in the primer layer-forming composition.

When the specified resin is dispersed in a particulate form, the average particle size of the specified resin particles is not particularly limited and is preferably less than 50 nm and more preferably 48 nm or less because the resulting primer layer can have more excellent transparency. The lower limit of the average particle size is not particularly limited and may be 10 nm or greater, for example.

The average particle size is calculated through dynamic light scattering using Nanotrac UPA-EX150 particle size distribution analyzer manufactured by Nikkiso Co., Ltd.

Commercial products may be used for the specified resin. For instance, "EVAFANOL" series manufactured by Nicca Chemical Co., Ltd. may be used.

### <Inorganic Oxide Particles>

The primer layer-forming composition contains inorganic oxide particles.

The type of the inorganic oxide particles is not particularly limited, and examples thereof include particles of an oxide of at least one metal selected from Ti, Zr, Si, Al, Sn, Sb, Ta, Ce, La, Fe, Zn, W and In or composite oxide particles of these. The composite oxide refers to an oxide including two or more types of metals (metal atoms) from among those listed above.

Commercial products of those inorganic oxide particles are easily available. Examples of such commercial products include a sol in which particles are dispersed in water or an organic solvent, the particles containing a component selected from the group consisting of titanium oxide, zirconium oxide, silicon oxide, tin oxide, aluminum oxide, and composite oxides of these.

The inorganic oxide particles may be of so-called core-shell type.

The average particle size of the inorganic oxide particles is not particularly limited and is preferably 1 to 200 nm and more preferably 5 to 30 nm, for instance.

The average particle size above is determined by measuring the diameters of at least one hundred inorganic oxide particles with a transmitted light microscope and calculating the arithmetic mean of the measurements. When the inorganic oxide particles do not have a perfect circle shape, the major axis length is taken as the diameter.

Various functional groups (e.g., epoxy group) may optionally be introduced to the surfaces of the inorganic oxide particles.

The inorganic oxide particles may be used in the form of sol obtained by dispersing the inorganic oxide particles in a dispersion medium such as water or a water-soluble organic solvent (particularly, alcoholic solvent).

Examples of the water-soluble organic solvent include water-soluble organic solvents described in the following section <Solvent>.

### <Solvent>

The primer layer-forming composition contains a solvent.

Examples of the solvent include water and organic solvents. The type of the organic solvent is not particularly limited, and examples thereof include alcoholic solvents, ketone solvents, ether solvents, ester solvents, hydrocarbon solvents, halogenated hydrocarbon solvents, amide solvents, sulfone solvents and sulfoxide solvents.

In particular, the solvent is preferably selected from the group consisting of water and water-soluble organic solvents.

The water-soluble organic solvent refers to an organic solvent having compatibility with water, and more specifically, an organic solvent having a solubility of not less than 10 wt% and preferably not less than 50 wt% with respect to water, at a temperature of 25°C.

Examples of the water-soluble organic solvent include: alcohols such as methanol, ethanol, isopropanol, n-butanol, ethylene glycol, propylene glycol, diethylene glycol, dipropylene glycol, cyclohexanediol, trimethylene glycol, tripropylene glycol, 1,2-butanediol, 1,3-butanediol, 1,4-butanediol, 1,4-butenediol, hexylene glycol, trimethylolpropane, hexylene glycol, and pentaerythritol; ethers such as ethylene glycol monomethyl ether, ethylene glycol monoisopropyl ether, ethylene glycol monoethyl ether, ethylene glycol mono-n-propyl ether, ethylene glycol mono-n-butyl ether, ethylene glycol mono-t-butyl ether, propylene glycol monomethyl ether, propylene glycol monoethyl ether(1-methoxy-2-propanol), propylene glycol mono-n-propyl ether, propylene glycol mono-n-butyl ether, and propylene glycol monomethyl ether acetate; and ketones such as acetone, diacetone alcohol, and acetylacetone.

In particular, for the sake of liquid stability of the primer layer-forming composition, it is preferable that the solvent contain water and the water-soluble organic solvent, with the water-soluble organic solvent content being not greater than 50 wt% based on the total weight of the solvent. The lower limit of the water-soluble organic solvent content is not particularly limited and may be for example 1 wt% or greater for the sake of transparency of the resulting primer layer.

When the solvent is as described above, even if the primer layer-forming composition is left at room temperature, the generation of deposits and the gelation are further suppressed.

The primer layer-forming composition may optionally contain various additives such as a surfactant, a UV absorber, an antiaging agent, a coating adjusting agent, a light stabilizer, an antioxidant, a discoloration preventing agent, and a dye.

Exemplary surfactants include silicone surfactants, fluorosurfactants, acrylic surfactants and vinyl surfactants. The surfactant content is preferably 10 to 10,000 ppm by weight based on the total weight of the primer layer-forming composition.

### <Primer Layer-forming Composition>

The primer layer-forming composition contains various components described above.

The method of manufacturing the primer layer-forming composition is not particularly limited; for example, the foregoing components may be mixed at one time or in separate steps.

The order of adding the components and the mixing conditions are not particularly limited.

One exemplary method is mixing an aqueous dispersion of the specified resin (a solution in which the specified resin is dispersed in a particulate form in water), a sol of the inorganic oxide particles (a sol in which the inorganic oxide particles are dispersed in water or the water-soluble organic solvent), the solvent, and other necessary components at one time.

The specified resin content of the primer layer-forming composition is not particularly limited and is preferably 20 to 80 wt% and more preferably 25 to 70 wt% based on the total solids (primer layer constituents) of the primer layer-forming composition because the resulting spectacle lens can have better balance between the crazing resistance and the impact resistance.

The total solids (primer layer constituents) refer to components that constitute the primer layer. The specified resin and the inorganic oxide particles described above correspond to the total solids, while the solvent is not included in the total solids. Even if a certain component constituting the primer layer is a liquid, this component is accounted as a solid.

The inorganic oxide particle content of the primer layer-forming composition is 10 to 40 vol% based on the volume of the total solids of the primer layer-forming composition. In particular, the content is preferably 15 to 40 vol% because the resulting spectacle lens can have more excellent crazing resistance.

The solvent content of the primer layer-forming composition is not particularly limited and is preferably 65 to 95 wt% and more preferably 70 to 90 wt% based on the total weight of the primer layer-forming composition for the sake of handleability of the primer layer-forming composition.

The primer layer-forming composition as above is a composition for forming a primer layer on a lens base.

### <Spectacle Lens>

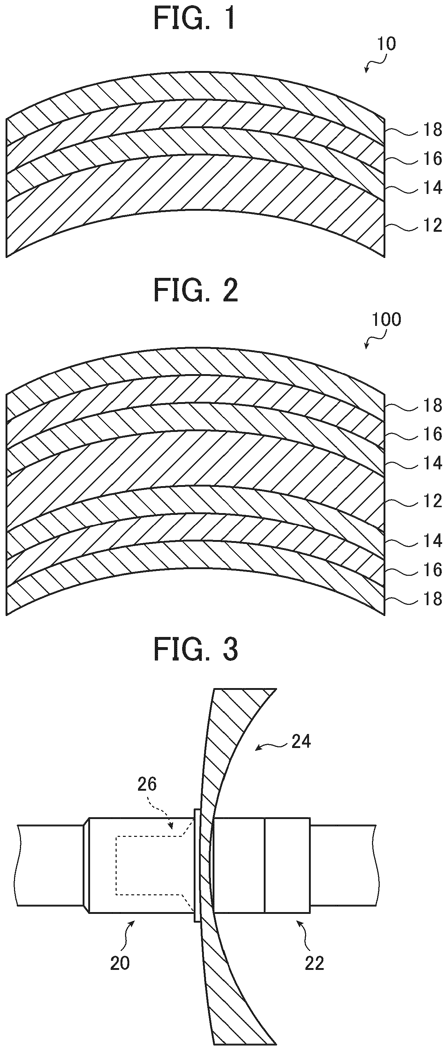

FIG. 1 is a cross-sectional view of one embodiment of a spectacle lens.

A spectacle lens 10 shown in FIG. 1 includes a lens base 12, a primer layer 14 disposed on one surface of the lens base 12, a hard coat layer 16 disposed on the primer layer 14, and an antireflective layer 18 disposed on the hard coat layer 16. In a worn state, the convex of the lens base 12 is an object side surface, and the concave thereof is an eyeball side surface.

While in FIG. 1, the primer layer 14, the hard coat layer 16 and the antireflective layer 18 are disposed only on the object side surface of the lens base 12, the invention is not limited to this example, and the primer layer 14, the hard coat layer 16 and the antireflective layer 18 may be disposed only on the eyeball side surface, or alternatively, as in a spectacle lens 100 shown in FIG. 2, the primer layer 14, the hard coat layer 16 and the antireflective layer 18 may be disposed on each surface of the lens base 12.

While in FIG. 1, the two layers, namely, the hard coat layer 16 and the antireflective layer 18 are stacked on the primer layer 14, the invention is not limited to this example, and only the hard coat layer 16 or only the antireflective layer 18 may be disposed on the primer layer 14.

Members included in the spectacle lens 10 are described below in detail.

### (Lens Base)

A lens base is a member on which a primer layer, a hard coat layer and an antireflective layer are formed.

The type of the lens base is not particularly limited, and examples thereof include a lens base made of plastic and a lens base made of inorganic glass, with a plastic lens base being preferred because of excellent handleability.

The material of the plastic lens base is not particularly limited, and examples thereof include acrylic resin, thiourethane resin, methacrylic resin, allyl resin, episulfide resin, polycarbonate resin, polyurethane resin, polyester resin, polystyrene resin, polyethersulfone resin, poly-4-methylpentene-1 resin, diethylene glycol bis(allyl carbonate) resin (CR-39), polyvinyl chloride resin, halogen-containing copolymer, and sulfur-containing copolymer.

The thickness of the lens base is not particularly limited and may be for example about 1 to about 30 mm for the sake of handleability.

The lens base need not be transparent as long as it is translucent, and may be colored.

The shape of the lens base 12 is not limited to the embodiment shown in FIG. 1, and the surface profile of the lens base is selected from given shapes such as convex, concave and flat shapes.

### (Primer Layer)

The primer layer is a layer disposed between the lens base and the hard coat layer or the antireflective layer, which will be described later. Typically, the primer layer is disposed between two layers to improve the adhesion therebetween.

The primer layer contains the polycarbonate polyurethane resin and the inorganic oxide particles.

The definition of the polycarbonate polyurethane resin (specified resin) is as described above, and the specified resin has the predetermined tensile strength and elongation.

The definition of the inorganic oxide particles is also as described above.

The specified resin content of the primer layer is not particularly limited and is preferably 20 to 80 wt% and more preferably 25 to 70 wt% based on the total weight of the primer layer because the resulting spectacle lens can have much better balance between the crazing resistance and the impact resistance.

The inorganic oxide particle content of the primer layer is 10 to 40 vol% based on the total volume of the primer layer. In particular, the content is preferably 15 to 40 vol% because the resulting spectacle lens can have more excellent crazing resistance.

The primer layer may optionally contain various additives such as a surfactant, a UV absorber, an antiaging agent, a light stabilizer, an antioxidant, a discoloration preventing agent, and a dye.

The thickness of the primer layer is not particularly limited and is preferably from 0.1 to 5.0 µm.

The method of forming the primer layer is not particularly limited, and it is preferable to use the primer layer-forming composition described above. One specific example of the method is a method involving bringing the primer layer-forming composition into contact with the lens base to form a coating, and optionally curing the coating. This method is described in detail below.

The method of bringing the primer layer-forming composition into contact with the lens base is not particularly limited, and examples thereof include dip coating and spin coating. Of these, dip coating is preferred for the sake of productivity.

Various pretreatments may optionally be performed on the surface(s) of the lens base before the primer layer-forming composition is brought into contact with the lens base. Exemplary pretreatments include degreasing treatment using an organic solvent, chemical treatment using a basic aqueous solution or an acidic aqueous solution, polishing treatment using an abrasive, plasma treatment, corona discharge treatment, flame treatment, and UV ozone treatment.

Formation of the coating on the lens base may be followed by curing treatment for curing the coating. One exemplary method of curing treatment is heating the coating. The solvent may be removed from the coating at heating. The heating temperature is not particularly limited and is preferably 25°C to 120°C and more preferably 25°C to 100°C for the purpose of preventing deformation and discoloring of the lens base that may be caused by heating. The heating time is not particularly limited and is preferably from 1 minute to 1 hour.

### (Hard Coat Layer)

The hard coat layer is a layer disposed on the primer layer and imparting scratch resistance to the lens base.

In the present description, the hard coat layer is defined as having, in terms of pencil hardness, the hardness "H" or higher hardness determined by the test method according to JIS K 5600.

For the hard coat layer, known hard coat layers are usable, and examples thereof include organic hard coat layers, inorganic hard coat layers, and organic-inorganic hybrid hard coat layers. In the spectacle lens field, organic-inorganic hybrid hard coat layers are typically employed.

The organic-inorganic hybrid hard coat layer is a layer formed using inorganic particles such as inorganic oxide particles as well as a hydrolyzable group-bearing organic silicon compound (silane coupling agent), a hydrolysate thereof and a hydrolyzed condensate thereof. Examples of the hydrolyzable group-bearing organic silicon compound include γ-glycidoxypropyltrimethoxysilane, γ-glycidoxypropylmethyldimethoxysilane, tetraethoxysilane, methyltriethoxysilane, and 1,2-bis(triethoxysilyl)ethane. Examples of the inorganic oxide particles include oxide particles of silicon, tin, zircon and titanium or composite particles thereof. The organic-inorganic hybrid hard coat layer is a hybrid material and therefore has excellent adhesion with the lens base or an underlayer (organic layer) which is the primer layer and with the antireflective layer (typically, a multilayer film of an inorganic oxide) formed on the hard coat surface, while having excellent surface hardness. Thus, the organic-inorganic hybrid hard coat layer is generally used in the spectacle lens field.

The organic hard coat layer is a hard coat layer formed using an organic compound. Examples of the organic compound include (meth)acrylate compounds, melamine compounds, and epoxy compounds. The organic hard coat layer is an organic substance and therefore has excellent adhesion with the lens base or an underlayer (organic layer) which is the primer layer but poor adhesion with an inorganic antireflective film. In the spectacle lens field, UV curing-type hard coat layer materials such as (meth)acrylate compounds are used in a part of products having no antireflective film.

The inorganic hard coat layer is provided by forming an inorganic substance, e.g., silica, into a film by a dry method such as vacuum evaporation, sputtering, ion plating, ion-beam assisted deposition or CVD. The inorganic hard coat layer has excellent surface hardness but has poor adhesion with the lens base or an underlayer (organic layer) which is the primer layer, and is thus hardly used in the spectacle lens field.

The thickness of the hard coat layer is not particularly limited and is preferably from 1 to 5 µm.

The method of forming the hard coat layer is not particularly limited, and a method using a hard coat layer-forming composition containing a predetermined component

(e.g., the foregoing organic compounds, inorganic compounds) is preferred for the sake of productivity. More specifically, a method that involves bringing the lens base having the primer layer thereon into contact with the hard coat layer-forming composition containing a predetermined component to form a coating on the primer layer, and optionally curing the coating, may be used. This method is described in detail below.

The method of bringing the lens base having the primer layer thereon into contact with the hard coat layer-forming composition containing a predetermined component is not particularly limited, and examples thereof include dip coating and spin coating. Of these, dip coating is preferred for the sake of productivity.

Formation of the coating on the primer layer may be followed by curing treatment in which the coating is heated and a solvent is removed from the coating. The heating temperature is not particularly limited and is preferably 90°C to 130°C and more preferably 90°C to 110°C for the purpose of preventing deformation and discoloring of the lens base that may be caused by heating. The heating time is not particularly limited and is preferably from 1 to 5 hours. The coating may be heated in stages under varied heating conditions.

### (Antireflective Layer)

The antireflective layer is a layer having the function of preventing the reflection of incident light.

In the present description, the antireflective layer is defined as a layer having refection characteristics in which the reflectance is reduced to about 5% or lower in the visible range of 400 to 700 nm.

The antireflective layer is not particularly limited in structure and may be of a single layer structure or a multilayer structure.

In the case of multilayer structure, it is preferable to have the structure in which a low refractive index layer(s) and a high refractive index layer(s) are alternately stacked. Examples of materials constituting the high refractive index layer include oxides of titanium, zircon, aluminum, tantalum and lanthanum. Examples of materials constituting the low refractive index layer include silica.

For the antireflective layer, a wet antireflective layer using a hollow silicon oxide may be used.

The thickness of the antireflective layer is not particularly limited and is typically 0.2 to 0.6 um.

The method of producing the antireflective layer is not particularly limited, and examples thereof include dry methods such as vacuum evaporation, sputtering, ion plating, ion-beam assisted deposition and CVD.

### (Other Layers)

The spectacle lens in this embodiment may include another layer in addition to the primer layer, the hard coat layer and the antireflective layer.

For instance, the spectacle lens may include a water and oil repellent layer at its outermost layer for the purpose of improving water and oil repellency. The water and oil repellent layer decreases surface energy of the spectacle lens and thus provides a contamination preventing function to the spectacle lens. In addition, the water and oil repellent layer improves sliding properties of a surface of the spectacle lens and thereby improves abrasion resistance of the spectacle lens.

The water and oil repellent layer contains a water and oil repellent component. The type of the water and oil repellent component is not particularly limited, and examples thereof include fluorine-containing compounds, silicone compounds, and compounds having a long-chain alkyl group, with fluorine-containing compounds being preferred, and fluorine-containing silane compounds being more preferred. The fluorine-containing silane compounds are fluorine-containing compounds having an alkoxysilyl group. The alkoxysilyl group is not particularly limited as long as it is a group with one to three alkoxy groups being bonded to a silicon atom, and examples thereof include a methoxy group, an ethoxy group and a propoxy group.

The method of forming the water and oil repellent layer is not particularly limited, and one exemplary method is a method involving applying a composition containing the water and oil repellent component onto a predetermined substrate. Exemplary application methods include dipping and spin coating. When dipping is employed for instance, a spectacle lens is dipped into a composition containing a water and oil repellent component and pulled out under specific conditions, thus applying the composition onto the spectacle lens.

The composition as above typically includes an organic solvent. Examples of the organic solvent for use include perfluorohexane, perfluoro-4-methoxybutane, perfluoro-4-ethoxybutane and m-xylene hexafluoride.

The water and oil repellent component content of the composition is not particularly limited and is preferably 0.01 to 0.5 wt% and more preferably 0.03 to 0.1 wt%. The content within the above range makes it possible to readily form the water and oil repellent layer while preventing the generation of coating unevenness.

Other methods of forming the water and oil repellent layer include dry methods such as vacuum evaporation.

The spectacle lens in this embodiment is obtained by sequentially forming the respective layers as described above. Specifically, one embodiment of the spectacle lens manufacturing method includes a step of forming a primer layer by applying the above-described primer layer-forming composition onto at least one of the object side surface and the eyeball side surface of the lens base to form a coating and curing the coating, a step of forming a hard coat layer on the primer layer, and a step of forming an antireflective layer on the hard coat layer.

To a spectacle lens in which the antireflective layer is disposed on the primer layer, a step of forming the antireflective layer on the primer layer is carried out.

### EXAMPLES

The spectacle lens and the primer layer-forming composition are described below in further detail by way of examples and comparative examples; however, the invention should not be construed as being limited to the following examples.

### <Example 1>

### (Preparation of Primer Layer-forming Composition P-1)

To 210 parts by weight of water dispersible polyurethane (manufactured by Nicca Chemical Co., Ltd.; commercial name, EVAFANOL HA-170) with a nonvolatile content of 37.4 wt%, 353 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 394 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain a primer layer-forming composition P-1.

### (Formation of Primer Layer)

The primer layer-forming composition P-1 was applied onto a plastic lens base (MR8; refractive index, 1.60; power S, -2.00; central thickness, 1.10 to 1.30 mm) by dipping. Then, the plastic lens base applied with the primer layer-forming composition P-1 was heated at 80°C for 20 minutes for precuring the composition, thereby forming a primer layer with 1.0-µm thickness on the plastic lens base.

### (Preparation of Hard Coat Layer-forming Composition)

To a reaction vessel, 197 parts by weight of a hydrolyzable group-bearing organic silicon compound (manufactured by Shin-Etsu Chemical Co., Ltd.; commercial name, KBM-403) was charged, and 45 parts by weight of 0.1 N aqueous hydrochloric acid solution was gradually added dropwise under stirring the reaction solution so that hydrolysis proceeded for a whole day and night, thus obtaining a hydrolysate and a partially hydrolyzed condensate of the hydrolyzable group-bearing organic silicon compound.

Then, to the thus-obtained hydrolysate and partially hydrolyzed condensate, 356 parts by weight of colloidal titanium oxide (manufactured by JGC Catalysts and Chemicals Ltd.; commercial name, OPTOLAKE 1130F-2 (A-8)) with a nonvolatile content of 30 wt% as inorganic oxide particles, 16 parts by weight of acetylacetone aluminum as a metal catalyst, 385 parts by weight of methyl alcohol, and 1 part by weight of surfactant (manufactured by Dow Corning Toray Co., Ltd.; commercial name, L7001) were added, and the resulting mixture was stirred to thereby obtain a hard coat layer-forming composition.

### (Formation of Hard Coat Layer)

The hard coat layer-forming composition was applied onto the plastic lens base having the primer layer thereon by dip coating. Then, the plastic lens base applied with the hard coat layer-forming composition was heated at 80°C for 20 minutes for precuring the composition and subsequently heated at 110°C for 3 hours for completely curing the same, thus forming a hard coat layer with 2.5-µm thickness.

### (Formation of Antireflective Layer)

The plastic lens base provided with the primer layer and the hard coat layer was placed in a vapor deposition device to deposit a vapor deposition material by an electron beam heating process, thereby forming an antireflective layer composed of first to fifth layers stated below. The layer structure of the antireflective layer is as stated below, in order from the hard coat layer side. In the following, nd represents the refractive index, and nλ represents the film thickness.
First layer: SiO₂ nd = 0.1 λ, nλ = 30 nm
Second layer: ZrO₂ nd = 0.16 λ, nλ = 37 nm
Third layer: SiO₂ nd = 0.06 λ, nλ = 20 nm
Fourth layer: ZrO₂ nd = 0.25 λ, nλ = 58 nm
Fifth layer: SiO₂ nd = 0.28 λ, nλ = 93 nm

### (Formation of Water and Oil Repellent Layer)

In 796 parts by weight of fluorine solvent (manufactured by Sumitomo 3M Limited; commercial name, HFE-7200), 4 parts by weight of water and oil repellent (manufactured by Shin-Etsu Chemical Co., Ltd.; commercial name, KY-130) with a nonvolatile content of 20 wt% was dissolved to thereby obtain a water and oil repellent with a nonvolatile content of 0.1 wt%.

Thereafter, the plastic lens base provided with the antireflective layer as obtained above was dipped in the water and oil repellent for 5 seconds, subsequently pulled out at a rate of 12 mm/sec and then heated at 50°C for 60 minutes, thereby forming the water and oil repellent layer.

A spectacle lens having the plastic lens base provided on each surface with the primer layer, the hard coat layer, the antireflective layer and the water and oil repellent layer was obtained through the foregoing procedures.

### <Example 2>

A spectacle lens was obtained according to the same procedures as those of Example 1 except that a primer layer-forming composition P-2 was used in place of the primer layer-forming composition P-1.

### (Preparation of Primer Layer-forming Composition P-2)

To 284 parts by weight of water dispersible polyurethane (manufactured by Nicca Chemical Co., Ltd.; commercial name, EVAFANOL HA-170) with a nonvolatile content of 37.4 wt%, 213 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 460 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain a primer layer-forming composition P-2.

### <Example 3>

A spectacle lens was obtained according to the same procedures as those of Example 1 except that a primer layer-forming composition P-3 was used in place of the primer layer-forming composition P-1.

### (Preparation of Primer Layer-forming Composition P-3)

To 118 parts by weight of water dispersible polyurethane (manufactured by Nicca Chemical Co., Ltd.; commercial name, EVAFANOL HA-170) with a nonvolatile content of 37.4 wt%, 528 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 312 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain a primer layer-forming composition P-3.

### <Example 4>

A spectacle lens was obtained according to the same procedures as those of Example 1 except that a primer layer-forming composition P-4 was used in place of the primer layer-forming composition P-1.

### (Preparation of Primer Layer-forming Composition P-4)

To 204 parts by weight of water dispersible polyurethane (manufactured by Nicca Chemical Co., Ltd.; commercial name, EVAFANOL HA-170) with a nonvolatile content of 37.4 wt%, 191 parts by weight of colloidal zirconium oxide (manufactured by Nissan Chemical Industries, Ltd.; commercial name, Suncolloid HZ-400M7; solvent, water; density (g/cm³), 3.8) with a nonvolatile content of 38%, 561 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-4.

### <Example 5>

A spectacle lens was obtained according to the same procedures as those of Example 1 except that a primer layer-forming composition P-5 was used in place of the primer layer-forming composition P-1.

### (Preparation of Primer Layer-forming Composition P-5)

To 210 parts by weight of water dispersible polyurethane (manufactured by Nicca Chemical Co., Ltd.; commercial name, EVAFANOL HA-170) with a nonvolatile content of 37.4 wt%, 353 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 436 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-5.

### <Comparative Example 1>

A spectacle lens was obtained according to the same procedures as those of Example 1 except that a primer layer-forming composition P-6 was used in place of the primer layer-forming composition P-1.

### (Preparation of Primer Layer-forming Composition P-6)

To 304 parts by weight of water dispersible polyurethane (manufactured by Nicca Chemical Co., Ltd.; commercial name, EVAFANOL HA-50C) with a nonvolatile content of 35 wt%, 213 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 441 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-6.

### <Comparative Example 2>

A spectacle lens was obtained according to the same procedures as those of Example 1 except that a primer layer-forming composition P-7 was used in place of the primer layer-forming composition P-1.

### (Preparation of Primer Layer-forming Composition P-7)

To 304 parts by weight of water dispersible polyurethane (manufactured by DKS Co. Ltd.; commercial name, SUPERFLEX 130) with a nonvolatile content of 35 wt%, 213 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 441 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-7.

### <Comparative Example 3>

A spectacle lens was obtained according to the same procedures as those of Example 1 except that a primer layer-forming composition P-8 was used in place of the primer layer-forming composition P-1.

### (Preparation of Primer Layer-forming Composition P-8)

To 278 parts by weight of water dispersible polyurethane (manufactured by DKS Co. Ltd.; commercial name, SUPERFLEX 460) with a nonvolatile content of 38 wt%, 213 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 465 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-8.

### <Comparative Example 4>

A spectacle lens was obtained according to the same procedures as those of Example 1 except that a primer layer-forming composition P-9 was used in place of the primer layer-forming composition P-1.

### (Preparation of Primer Layer-forming Composition P-9)

To 266 parts by weight of water dispersible polyurethane (manufactured by DKS Co. Ltd.; commercial name, SUPERFLEX 740) with a nonvolatile content of 40 wt%, 213 parts by weight of colloidal titanium oxide (manufactured by JGC Catalysts and Chemicals Ltd.; commercial name, OPTOLAKE; solvent, water; density (g/cm³), 3.6) with a nonvolatile content of 20 wt%, 479 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-9.

### <Comparative Example 5>

A spectacle lens was obtained according to the same procedures as those of Example 1 except that a primer layer-forming composition P-10 was used in place of the primer layer-forming composition P-1.

### (Preparation of Primer Layer-forming Composition P-10)

To 401 parts by weight of water dispersible polyurethane (manufactured by Nicca Chemical Co., Ltd.; commercial name, EVAFANOL HA-170) with a nonvolatile content of 37.4 wt%, 556 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-10.

### <Comparative Example 6>

A spectacle lens was obtained according to the same procedures as those of Example 1 except that a primer layer-forming composition P-11 was used in place of the primer layer-forming composition P-1.

### (Preparation of Primer Layer-forming Composition P-11)

To 87 parts by weight of water dispersible polyurethane (manufactured by Nicca Chemical Co., Ltd.; commercial name, EVAFANOL HA-170) with a nonvolatile content of 37.4 wt%, 586 parts by weight of colloidal titanium oxide (manufactured by JGC Catalysts and Chemicals Ltd.; commercial name, OPTOLAKE; solvent, water; density (g/cm³), 3.6) with a nonvolatile content of 20%, 285 parts by weight of water, 42 parts by weight of 1-methoxy-2-propanol, and 1 part by weight of surfactant (manufactured by Dow Corning Toray Co., Ltd.; commercial name, L7001) were added, and the resulting mixture was stirred to thereby obtain the primer layer-forming composition P-11.

Those polyurethane resins used in Examples and Comparative Examples above were each evaluated for the tensile strength and the elongation as well as the average particle size of polyurethane resin particles, as follows.

### (Tensile Strength Measurement)

An aqueous dispersion containing each of the polyurethane resins was taken into a Petri dish in such an amount that a film obtained after drying would have a thickness of about 500 µm, and dried at room temperature for 24 hours and subsequently at 80°C for 6 hours to form a polyurethane resin film.

Thereafter, the film was cut into a size of 15-mm width and 200-mm length, and then gage marks were given at 50-mm intervals in the central region, thus producing a sample. The obtained sample was attached to a tensile tester (Autograph AGS-X, manufactured by Shimadzu Corporation), the distance between the grips of the tensile tester was set to 100 mm, the film was pulled to its breaking point at a rate of 200 mm/min, and the stress at the breaking point was defined as the tensile strength. The measurement temperature was 25°C.

### (Elongation Measurement)

The elongation was measured concurrently with the foregoing measurement (tensile strength measurement) and calculated as follows. Elongation (%) = ((Gage distance at breaking point - Gage distance before testing) / (Gage distance before testing) x 100

### (Average Particle Size Measurement)

The average particle size of each urethane resin was measured through dynamic light scattering using Nanotrac UPA-EX150 particle size distribution analyzer manufactured by Nikkiso Co., Ltd. For specimens, the water dispersible polyurethanes used in Examples and Comparative Examples were used.

With the spectacle lenses of Examples and Comparative Examples obtained above, the evaluations below were conducted.

### (Crazing Resistance Evaluation)

The crazing resistance was evaluated with a device shown in FIG. 3 having the same structure as that of a working machine used for lens shape machining.

In the device shown in FIG. 3, the spectacle lens of each of Examples and Comparative Examples was held under a 30 kg load for 10 seconds. Thereafter, the spectacle lens was held for 10 seconds every time the load increased by 10 kg, and whether a crack was present or not in the spectacle lens from which dirt had been removed using acetone was visually observed in front of a blackout curtain and under a fluorescent lamp. The crazing resistance evaluation was conducted after the spectacle lens was left to stand in a constant temperature and humidity bath at a temperature of 40°C and a humidity of 80 RH% for 1 week.

The evaluation was continued until cracking occurred to such a level that cracking was observable under the fluorescent lamp, and the average between a load with which cracking occurrence was visually confirmed under the fluorescent lamp and its immediately preceding load was defined as a cracking occurrence load. The evaluation criteria are as follows:
Excellent: Cracking occurrence load of 100 kg or greater
Good: Cracking occurrence load of 90 kg or greater and less than 100 kg
Poor: Cracking occurrence load of less than 90 kg

The device shown in FIG. 3 includes a cup receiver 20 and a lens holding section 22 (the same mechanism as a lens holding section of LE-9000SX manufactured by Nidek Co., Ltd.). The optical center of a spectacle lens 24 of each of Examples and Comparative Examples as manufactured by the foregoing procedures was attached to a lens edger cup 26 (used was a half-eye lens cup (small) manufactured by Nidek Co., Ltd.) by the aid of locking tape (LEAP III) manufactured by 3M, the lens edger cup 26 was mounted on the cup receiver 20, the spectacle lens 24 was sandwiched between the cup receiver 20 and the lens holding section 22, and the foregoing evaluation was conducted.

### (Impact Resistance Evaluation)

Spectacle lenses for impact resistance evaluation to be described below were obtained according to the same procedures as those of Examples 1 to 5 and Comparative Examples 1 to 6 except that a plastic lens base (N19; refractive index, 1.74; power S, -1.50) was used in place of the plastic lens base (MR8; refractive index, 1.60; power S, -2.00; central thickness, 1.10 to 1.30 mm).

Subsequently, using an impact tester, a 340 g tup was dropped from a height of 60 cm toward each of the spectacle lenses for impact resistance evaluation, and when the spectacle lens was broken, the maximum energy applied until the spectacle lens was broken was used for the evaluation. The evaluation criteria are as follows:
Good: Maximum energy of not less than 0.2 J
Poor: Maximum energy of less than 0.2 J

### (Transparency Evaluation)

After dirt on a surface of the spectacle lens manufactured in each of Examples and Comparative Examples was removed with acetone, the transmittance was measured and the luminous transmittance for 380 to 780 nm was measured using U-4100 spectrophotometer (manufactured by Hitachi, Ltd.), and the evaluation was conducted according to the following criteria.
Good: Luminous transmittance of not less than 97.5%
Poor: Luminous transmittance of less than 97.5%

### (Adhesion Evaluation)

The spectacle lens manufactured in each of Examples and Comparative Examples was put in a weather resistance evaluation apparatus (SUN TESTER) and irradiated with UV light for 200 hours. Then, the adhesion of the coating on the plastic lens base was evaluated by a cross-cut method (by reference to JIS K 5400-8.5). The evaluation criteria are as follows:
Good: The total area of flaking portions within 25 squares was less than an area equivalent to 1 square.
Poor: The total area of flaking portions within 25 squares was not less than an area equivalent to 1 square.

### (Liquid Stability Evaluation of Primer Layer-forming Composition)

The primer layer-forming composition used in each of Examples and Comparative Examples was stirred at room temperature for 1 week, and the presence of a deposit and the occurrence of gelation were visually checked. The evaluation criteria are as follows:
Good: There was neither deposit generation nor gelation occurrence.
Poor: There was deposit generation or gelation occurrence.

In Table 1, "SF130," "SF460" and "SF740" in the "resin name" column represent "SUPERFLEX 130," "SUPERFLEX 460" and "SUPERFLEX 740," respectively.

The "skeleton" column shows the types of polyurethane resins. "Polycarbonate" refers to a polycarbonate polyurethane resin, "polyether" to a polyether polyurethane resin, and "polyester" to polyester polyurethane resin. The polyether polyurethane resin represents a polyurethane resin formed using polyether as a diol component, and the polyester polyurethane resin represents a polyurethane resin formed using polyester as a diol component.

The "content (vol%)" in the "inorganic oxide particles" column represents the content (vol%) of the inorganic oxide particles based on the total volume of the primer layer. Note that these values are the same as the inorganic oxide particle contents (vol%) based on the volume of the total solids of the primer layer-forming composition.

The "water-soluble organic solvent (%/solvent)" column of the "solvent" column represents the water-soluble organic solvent content (wt%) based on the total weight of the solvent.

**[Table 1]**

| Table 1 | Polyurethane resin | | | | | Inorganic oxide particles | | Solvent | Crazing resistance | Impact resistance | Transparency | Adhesion | Liquid stability |
|---|---|---|---|---|---|---|---|---|---|---|---|---|---|
| | Resin name | Tensile strength (N/mm²) | Elongation (%) | Average particle size (nm) | Skeleton | Type | Content (vol%) | Water-soluble organic solvent (%/Solvent) | | | | | |
| Example 1 | HA-170 | 47 | 340 | 48 | Polycarbonate | TiO₂ | 20 | 5 | Excellent | Good | Good | Good | Good |
| Example 2 | HA-170 | 47 | 340 | 48 | Polycarbonate | TiO₂ | 10 | 5 | Good | Good | Good | Good | Good |
| Example 3 | HA-170 | 47 | 340 | 48 | Polycarbonate | TiO₂ | 40 | 5 | Excellent | Good | Good | Good | Good |
| Example 4 | HA-170 | 47 | 340 | 48 | Polycarbonate | ZrO₂ | 20 | 5 | Excellent | Good | Good | Good | Good |
| Example 5 | HA-170 | 47 | 340 | 48 | Polycarbonate | TiO₂ | 20 | 51 | Good | Good | Good | Good | Poor |
| Comparative example 1 | HA-50C | 40 | 450 | 50 | Polycarbonate | TiO₂ | 10 | 5 | Poor | Good | Poor | Good | Good |
| Comparative example 2 | SF130 | 68 | 6 | 20 | Polyether | TiO₂ | 10 | 5 | Excellent | Poor | Good | Poor | Good |
| Comparative example 3 | SF460 | 25 | 750 | 30 | Polycarbonate | TiO₂ | 10 | 5 | Poor | Good | Good | Good | Good |
| Comparative example 4 | SF740 | 10 | 1300 | 200 | Polyester | TiO₂ | 10 | 5 | Poor | Good | Poor | Poor | Good |
| Comparative example 5 | HA-170 | 47 | 340 | 48 | Polycarbonate | TiO₂ | 0 | 5 | Poor | Good | Good | Good | Good |
| Comparative example 6 | HA-170 | 47 | 340 | 48 | Polycarbonate | TiO₂ | 50 | 5 | Excellent | Poor | Poor | Poor | Good |

As can be seen from Table 1, the spectacle lenses of Examples exhibited the desired effects (crazing resistance, impact resistance, transparency). Examples 1 to 5 were excellent also in adhesion.

In particular, the comparison of Examples 1 to 3 revealed that when the inorganic oxide particle content was from 15 to 40 vol%, the crazing resistance was more excellent.

The comparison between Examples 1 to 4 and Example 5 revealed that when the water-soluble organic solvent content was not greater than 50 wt% based on the total weight of the solvent, the primer layer-forming composition had more excellent liquid stability.

### REFERENCE SIGNS LIST

- 10: spectacle lens
- 12: lens base
- 14: primer layer
- 16: hard coat layer
- 18: antireflective layer
- 20: cup receiver
- 22: lens holding section
- 24: spectacle lens
- 26: lens edger cup

## Claims

1. A spectacle lens (10, 24) comprising:
a lens base (12);
a primer layer (14) disposed on at least one of an object side surface and an eyeball side surface of the lens base (12); and
at least one layer selected from the group consisting of a hard coat layer (16) and an antireflective layer (18), the at least one layer being disposed on the primer layer (14),
wherein the primer layer (14) contains a polycarbonate polyurethane resin and inorganic oxide particles,
wherein the polycarbonate polyurethane resin has a tensile strength, measured as indicated in the description, of greater than 40 N/mm²,
wherein the polycarbonate polyurethane resin has an elongation, measured as indicated in the description, of not less than 300%, and
wherein a content of the inorganic oxide particles is 10 to 40 vol% based on a total volume of the primer layer (14) .

2. The spectacle lens according to claim 1,
wherein the primer layer and the at least one layer selected from the group consisting of the hard coat layer and the antireflective layer and disposed on the primer layer are disposed on each of the object side surface and the eyeball side surface of the lens base.

3. The spectacle lens according to claim 1 or 2,
wherein the content of the inorganic oxide particles is 15 to 40 vol% based on the total volume of the primer layer.

4. The spectacle lens according to any one of claims 1 to 3,
wherein the inorganic oxide particles are particles containing a component selected from the group consisting of titanium oxide, zirconium oxide, silicon oxide, aluminum oxide, tin oxide, and composite oxides thereof.

5. The spectacle lens according to any one of claims 1 to 4,
wherein the hard coat layer is disposed on the primer layer, and the antireflective layer is disposed on the hard coat layer.

6. The spectacle lens according to any one of claims 1 to 4,
wherein only the hard coat layer is disposed on the primer layer.

7. The spectacle lens according to any one of claims 1 to 4,
wherein only the antireflective layer is disposed on the primer layer.

8. A primer layer-forming composition comprising a polycarbonate polyurethane resin, inorganic oxide particles, and a solvent,
wherein the polycarbonate polyurethane resin has a tensile strength, measured as indicated in the description, of greater than 40 N/mm²,
wherein the polycarbonate polyurethane resin has an elongation, measured as indicated in the description, of not less than 300%, and
wherein a content of the inorganic oxide particles is 10 to 40 vol% based on a volume of total solids of the primer layer-forming composition.

9. The primer layer-forming composition according to claim 8,
wherein the content of the inorganic oxide particles is 15 to 40 vol% based on the volume of total solids of the primer layer-forming composition.

10. The primer layer-forming composition according to claim 8 or 9,
wherein the inorganic oxide particles are particles containing a component selected from the group consisting of titanium oxide, zirconium oxide, silicon oxide, aluminum oxide, tin oxide, and composite oxides thereof.

11. The primer layer-forming composition according to any one of claims 8 to 10,
wherein the polycarbonate polyurethane resin is dispersed in a particulate form, and
wherein particles of the polycarbonate polyurethane resin have an average particle size of less than 50 nm, as determined by the method disclosed in the description.

12. The primer layer-forming composition according to any one of claims 8 to 11,
wherein the solvent contains water and a water-soluble organic solvent, and
wherein a content of the water-soluble organic solvent is not greater than 50 wt% based on a total weight of the solvent.

13. A spectacle lens manufacturing method comprising a step of forming a primer layer by applying the primer layer-forming composition according to any one of claims 8 to 12 onto at least one of an object side surface and an eyeball side surface of a lens base to form a coating and curing the coating.

14. The spectacle lens manufacturing method according to claim 13,
wherein the primer layer is formed on each of the object side surface and the eyeball side surface of the lens base.

15. The spectacle lens manufacturing method according to claim 13 or 14, including a step of forming a hard coat layer on the primer layer.

16. The spectacle lens manufacturing method according to claim 15, including a step of forming an antireflective layer on the hard coat layer.

17. The spectacle lens manufacturing method according to claim 13 or 14, including a step of forming an antireflective layer on the primer layer.

## Patentansprüche

1. Brillenglas (10, 24), umfassend:
eine Linsenbasis (12);
eine Primerschicht (14), angeordnet auf mindestens einer von einer objektseitigen Oberfläche und einer augenseitigen Oberfläche der Linsenbasis (12); und
mindestens eine Schicht, die aus der Gruppe ausgewählt ist, die aus einer Hartbeschichtungsschicht (16) und einer Antireflexionsschicht (18) besteht, wobei die mindestens eine Schicht auf der Primerschicht (14) angeordnet ist,
wobei die Primerschicht (14) ein Polycarbonat-Polyurethan-Harz und anorganische Oxidpartikel enthält,
wobei das Polycarbonat-Polyurethan-Harz eine Zugfestigkeit, gemessen wie in der Beschreibung angegeben, von mehr als 40 N/mm² aufweist,
wobei das Polycarbonat-Polyurethan-Harz eine Dehnung, gemessen wie in der Beschreibung angegeben, von nicht weniger als 300% aufweist, und
wobei ein Gehalt der anorganischen Oxidpartikel 10 bis 40 Vol.-%, bezogen auf das Gesamtvolumen der Primerschicht (14), beträgt.

2. Brillenglas gemäß Anspruch 1,
wobei die Primerschicht und die mindestens eine Schicht, die aus der Gruppe, bestehend aus der Hartbeschichtungsschicht und der Antireflexionsschicht ausgewählt ist und auf der Primerschicht angeordnet ist, sowohl auf der objektseitigen Oberfläche als auch auf der augenseitigen Oberfläche der Linsenbasis angeordnet sind.

3. Brillenglas gemäß Anspruch 1 oder 2,
wobei der Gehalt der anorganischen Oxidpartikel 15 bis 40 Vol.-%, bezogen auf das Gesamtvolumen der Primerschicht, beträgt.

4. Brillenglas gemäß einem der Ansprüche 1 bis 3, wobei die anorganischen Oxidpartikel Partikel sind, die eine Komponente enthalten, die aus der Gruppe ausgewählt ist, die aus Titanoxid, Zirkoniumoxid, Siliciumoxid, Aluminiumoxid, Zinnoxid und Kompositoxiden davon besteht.

5. Brillenglas gemäß einem der Ansprüche 1 bis 4, wobei die Hartbeschichtungsschicht auf der Primerschicht angeordnet ist und die Antireflexionsschicht auf der Hartbeschichtungsschicht angeordnet ist.

6. Brillenglas gemäß einem der Ansprüche 1 bis 4, wobei nur die Hartbeschichtungsschicht auf der Primerschicht angeordnet ist.

7. Brillenglas gemäß einem der Ansprüche 1 bis 4, wobei nur die Antireflexionsschicht auf der Primerschicht angeordnet ist.

8. Zusammensetzung zur Bildung einer Primerschicht, umfassend ein Polycarbonat-Polyurethan-Harz, anorganische Oxidpartikel und ein Lösungsmittel,
wobei das Polycarbonat-Polyurethan-Harz eine Zugfestigkeit, gemessen wie in der Beschreibung angegeben, von mehr als 40 N/mm² aufweist,
wobei das Polycarbonat-Polyurethan-Harz eine Dehnung, gemessen wie in der Beschreibung angegeben, von nicht weniger als 300% aufweist, und
wobei ein Gehalt der anorganischen Oxidpartikel 10 bis 40 Vol.-%, bezogen auf das Gesamtfeststoffvolumen der Zusammensetzung zur Bildung einer Primerschicht, beträgt.

9. Zusammensetzung zur Bildung einer Primerschicht gemäß Anspruch 8,
wobei der Gehalt der anorganischen Oxidpartikel 15 bis 40 Vol.-%, bezogen auf das Gesamtfeststoffvolumen der Zusammensetzung zur Bildung einer Primerschicht, beträgt.

10. Zusammensetzung zur Bildung einer Primerschicht gemäß Anspruch 8 oder 9,
wobei die anorganischen Oxidpartikel Partikel sind, die eine Komponente enthalten, die aus der Gruppe ausgewählt ist, die aus Titanoxid, Zirkoniumoxid, Siliciumoxid, Aluminiumoxid, Zinnoxid und Kompositoxiden davon besteht.

11. Zusammensetzung zur Bildung einer Primerschicht gemäß einem der Ansprüche 8 bis 10,
wobei das Polycarbonat-Polyurethan-Harz in Partikelform dispergiert ist, und
wobei die Partikel des Polycarbonat-Polyurethan-Harzes eine durchschnittliche Partikelgröße von weniger als 50 nm, gemessen gemäß dem in der Beschreibung offenbarten Verfahren, aufweisen.

12. Zusammensetzung zur Bildung einer Primerschicht gemäß einem der Ansprüche 8 bis 11,
wobei das Lösungsmittel Wasser und ein wasserlösliches organisches Lösungsmittel enthält, und
wobei ein Gehalt des wasserlöslichen organischen Lösungsmittels nicht mehr als 50 Gew.-%, bezogen auf das Gesamtgewicht des Lösungsmittels, beträgt.

13. Verfahren zur Herstellung eines Brillenglases, umfassend einen Schritt des Bildens einer Primerschicht durch Auftragen der Zusammensetzung zur Bildung einer Primerschicht gemäß einem der Ansprüche 8 bis 12 auf mindestens eine von einer objektseitigen Oberfläche und einer augenseitigen Oberfläche einer Linsenbasis, um eine Beschichtung zu bilden, und des Härtens der Beschichtung.

14. Verfahren zur Herstellung eines Brillenglases gemäß Anspruch 13,
wobei die Primerschicht sowohl auf der objektseitigen Oberfläche als auch auf der augenseitigen Oberfläche der Linsenbasis gebildet wird.

15. Verfahren zur Herstellung eines Brillenglases gemäß Anspruch 13 oder 14, enthaltend einen Schritt des Bildens einer Hartbeschichtungsschicht auf der Primerschicht.

16. Verfahren zur Herstellung eines Brillenglases gemäß Anspruch 15, enthaltend einen Schritt des Bildens einer Antireflexionsschicht auf der Hartbeschichtungsschicht.

17. Verfahren zur Herstellung eines Brillenglases gemäß Anspruch 13 oder 14, enthaltend einen Schritt des Bildens einer Antireflexionsschicht auf der Primerschicht.

## Revendications

1. Verre de lunettes (10, 24) comprenant :
une base de verre (12) ;
une couche d'apprêt (14) disposée sur au moins une parmi une surface côté objet et une surface côté globe oculaire de la base de verre (12) ; et
au moins une couche sélectionnée dans le groupe consistant en une couche de revêtement dure (16) et une couche antireflet (18), l'au moins une couche étant disposée sur la couche d'apprêt (14),
dans lequel la couche d'apprêt (14) contient une résine de polycarbonate polyuréthane et des particules d'oxyde inorganique,
dans lequel la résine de polycarbonate polyuréthane présente une résistance à la traction, mesurée comme indiqué dans la description, supérieure à 40 N/mm²,
dans lequel la résine de polycarbonate polyuréthane présente un allongement, mesuré comme indiqué dans la description, d'au moins 300 %, et
dans lequel la teneur en particules d'oxyde inorganique est de 10 à 40 % en volume par rapport à un volume total de la couche d'apprêt (14).

2. Verre de lunettes selon la revendication 1,
dans lequel la couche d'apprêt et l'au moins une couche sélectionnée dans le groupe consistant en la couche de revêtement dure et la couche antireflet et disposée sur la couche d'apprêt sont disposées sur chacune de la surface côté objet et de la surface côté globe oculaire de la base de verre.

3. Verre de lunettes selon la revendication 1 ou la revendication 2,
dans lequel la teneur en particules d'oxyde inorganique est de 15 à 40 % en volume sur la base du volume total de la couche d'apprêt.

4. Verre de lunettes selon l'une quelconque des revendications 1 à 3,
dans lequel les particules d'oxyde inorganique sont des particules contenant un composant sélectionné dans le groupe consistant en l'oxyde de titane, l'oxyde de zirconium, l'oxyde de silicium, l'oxyde d'aluminium, l'oxyde d'étain et des oxydes composites de ceux-ci.

5. Verre de lunettes selon l'une quelconque des revendications 1 à 4,
dans lequel la couche de revêtement dure est disposée sur la couche d'apprêt et la couche antireflet est disposée sur la couche de revêtement dure.

6. Verre de lunettes selon l'une quelconque des revendications 1 à 4,
dans lequel seule la couche de revêtement dure est disposée sur la couche d'apprêt.

7. Verre de lunettes selon l'une quelconque des revendications 1 à 4,
dans lequel seule la couche antireflet est disposée sur la couche d'apprêt.

8. Composition pour formation de couche d'apprêt comprenant une résine de polycarbonate polyuréthane, des particules d'oxyde inorganique et un solvant,
dans laquelle la résine de polycarbonate polyuréthane présente une résistance à la traction, mesurée comme indiqué dans la description, supérieure à 40 N/mm²,
dans laquelle la résine de polycarbonate polyuréthane présente un allongement, mesuré comme indiqué dans la description, d'au moins 300 %, et
dans laquelle la teneur en particules d'oxyde inorganique est de 10 à 40 % en volume sur la base d'un volume des solides totaux de la composition pour formation de couche d'apprêt.

9. Composition pour formation de couche d'apprêt selon la revendication 8,
dans laquelle la teneur en particules d'oxyde inorganique est de 15 à 40 % en volume sur la base du volume des solides totaux de la composition pour formation de couche d'apprêt.

10. Composition pour formation de couche d'apprêt selon la revendication 8 ou la revendication 9,
dans laquelle les particules d'oxyde inorganique sont des particules contenant un composant sélectionné dans le groupe consistant en l'oxyde de titane, l'oxyde de zirconium, l'oxyde de silicium, l'oxyde d'aluminium, l'oxyde d'étain et des oxydes composites de ceux-ci.

11. Composition pour formation de couche d'apprêt selon l'une quelconque des revendications 8 à 10,
dans laquelle la résine de polycarbonate polyuréthane est dispersée sous une forme particulaire, et
dans laquelle les particules de la résine de polycarbonate polyuréthane présentent une taille moyenne de particule inférieure à 50 nm, telle que déterminée par le procédé divulgué dans la description.

12. Composition pour formation de couche d'apprêt selon l'une quelconque des revendications 8 à 11,
dans laquelle le solvant contient de l'eau et un solvant organique soluble dans l'eau, et
dans laquelle la teneur en solvant organique soluble dans l'eau n'est pas supérieure à 50 % en poids sur la base d'un poids total du solvant.

13. Procédé de fabrication de verre de lunettes comprenant une étape de formation d'une couche d'apprêt en appliquant la composition pour formation de couche d'apprêt selon l'une quelconque des revendications 8 à 12 sur au moins une parmi une surface côté objet et une surface côté globe oculaire d'une base de verre pour former un revêtement et réalisant un durcissement du revêtement.

14. Procédé de fabrication de verre de lunettes selon la revendication 13,
dans lequel la couche d'apprêt est formée sur chacune de la surface côté objet et de la surface côté globe oculaire de la base de verre.

15. Procédé de fabrication de verre de lunettes selon la revendication 13 ou la revendication 14, incluant une étape de formation d'une couche de revêtement dure sur la couche d'apprêt.

16. Procédé de fabrication de verre de lunettes selon la revendication 15, incluant une étape de formation d'une couche antireflet sur la couche de revêtement dure.

17. Procédé de fabrication de verre de lunettes selon la revendication 13 ou la revendication 14, incluant une étape de formation d'une couche antireflet sur la couche d'apprêt.
